# EUROPEAN PATENT APPLICATION

(11) **EP 2 933 762 A1**
(43) Date of publication of application: **21.10.2015**
(21) Application number: 14165210.7
(22) Date of filing: 17.04.2014
(51) Int. Cl.: G06Q 10/06

(54) **Distribution management**

(71) Applicant: Rovio Entertainment Ltd, 02150 Espoo (FI)
(72) Inventor: Virtanen, Antti, 02150 Espoo (FI); Jin, Shen, 02150 Espoo (FI); Lang, Markus, 00100 Helsinki (FI)
(74) Representative: Boco IP Oy Ab

(57) **Abstract**

According to an example embodiment of the present invention, there is provided an apparatus comprising at least one processing core, at least one memory including computer program code, the at least one memory and the computer program code being configured to, with the at least one processing core, cause the apparatus at least to receive a first update from a second apparatus and a second update from a third apparatus, based at least in part on a first distribution and at least one of the first update and the second update, derive a second distribution, and cause information concerning the second distribution to be transmitted to at least one of the second apparatus and the third apparatus.

## Description

### FIELD OF INVENTION

The present invention relates to the field of process control and distribution management.

### BACKGROUND OF INVENTION

Various industrial processes produce distributions, for example a car manufacturing plant may produce a distribution of times it takes to produce a car, which may be known as completion times. Most cars may be produced in a time that corresponds to a process time which is a design parameter of an assembly line comprised in the manufacturing plant, but some cars may take longer to produce in case defective parts need to be changed before the car is released into the sales channel, for example. In this case, the distribution of completion times would be flat at zero until the process time, since cars are unlikely to be completed any faster than the designed process time, after which the completion times would exhibit a declining tail, since times in excess of the process time are likely to be short, with longer additional times being increasingly rare.

The car manufacturer may prefer the distribution to be as peak-like as possible so the output of the manufacturing plant is as predictable as possible, and as many cars as possible are produced in the process time.

Another example of an industrial distribution is a pellet manufacturing unit, wherein the pellets may comprise combustible fuel pellets, cat food pellets or raw plastic pellets, for example. The pellet size may define a distribution, for example it may comprise that an average pellet size is 7mm, 50% of pellets fall within the range of 6 - 8 mm and 90% of pellets fall within the range 5 - 9 mm.

The pellet manufacturer may prefer to try to decrease the proportion of pellets outside 5 - 9 mm, as that range may be acceptable and cheaper to obtain than a more peak-like distribution centred more sharply around 7mm. For example, pellets between 5 - 9 mm may be usable in further processes, while pellets larger than 9mm or smaller than 5mm may cause decreased performance in the further processes. In this sense 8mm pellets may be as good as 7mm pellets.

Data compiled in deriving distributions, be it completion times, pellet sizes or other parameters characterising process outcomes, may be referred to as performance scores.

Distributions may be presented in different formats, wherein an underlying distribution may be stored, communicated or visualised in different ways. For example a histogram or pie chart may be useful for conveying information concerning a distribution without needing to communicate the underlying distribution, such as for example the size of each and every pellet produced, which might involve communication a great deal of information.

Distributed computing comprises using a set of computing resources, such as computers or processing cores, to collectively perform a task. For example, a set of Monte Carlo simulations may be run on a grid of computers such that each computer is assigned a subset of the simulations to be performed. In some cases, computers or processing cores comprised in the distributed system may communicate with each other to enable performance of a common goal.

### SUMMARY OF THE INVENTION

According to a first aspect of the present invention, there is provided an apparatus comprising at least one processing core, at least one memory including computer program code, the at least one memory and the computer program code being configured to, with the at least one processing core, cause the apparatus at least to receive a first update from a second apparatus and a second update from a third apparatus, based at least in part on a first distribution and at least one of the first update and the second update, derive a second distribution, and cause information concerning the second distribution to be transmitted to at least one of the second apparatus and the third apparatus.

Various embodiments of the first aspect may comprise at least one feature from the following bulleted list:
- the second distribution comprises a distribution of performance scores obtained in a plurality of process nodes running processes
- the performance scores describe results of corresponding process yields in the processes
- the processes comprise at least one of chemical, industrial or game processes
- the at least one memory and the computer program code are further configured to, with the at least one processing core, cause the apparatus to modify at least one parameter of the processes as a response to the second distribution
- the at least one memory and the computer program code are further configured to, with the at least one processing core, cause the apparatus to transmit information concerning the modifying to at least one of the second apparatus and the third apparatus
- the modifying aims to cause a third distribution, to be derived after the second distribution, to be flatter than the second distribution
- the modifying aims to cause a third distribution, to be derived after the second distribution, to be sharper than the second distribution
- the modifying aims to cause a third distribution, to be derived after the second distribution, to comprise a higher number of peaks than the second distribution
- the performance scores describe lengths of time the processes take to complete
- the performance scores describe grain sizes of granular product produced in the processes
- the performance scores describe scores obtained in the processes, the processes comprising games

According to a second aspect of the present invention, there is provided a method comprising receiving, in an apparatus, a first update from a second apparatus and a second update from a third apparatus, deriving a second distribution based at least in part on a first distribution and at least one of the first update and the second update, and causing information concerning the second distribution to be transmitted to at least one of the second apparatus and the third apparatus.

Various embodiments of the second aspect may comprise at least one feature corresponding to at least one feature from the preceding bulleted list laid out in connection with the first aspect.

According to a third aspect of the present invention, there is provided an apparatus comprising at least one processing core, at least one memory including computer program code, the at least one memory and the computer program code being configured to, with the at least one processing core, cause the apparatus at least to receive a first distribution from a second apparatus, derive a local distribution, derive difference information describing how the local distribution differs from the first distribution, and cause the difference information to be transmitted to the second apparatus.

In some embodiments of the third aspect, the at least one memory and the computer program code are configured to, with the at least one processing core, cause the apparatus to derive the local distribution from information received in the apparatus from nodes that are under the control of the apparatus.

According to a fourth aspect of the present invention, there is provided a method, comprising receiving, in an apparatus, a first distribution from a second apparatus, deriving a local distribution, deriving difference information describing how the local distribution differs from the first distribution, and causing the delta information to be transmitted to the second apparatus.

According to a fifth aspect of the present invention, there is provided an apparatus comprising means for receiving, in a first apparatus, a first update from a second apparatus and a second update from a third apparatus, means for deriving a second distribution based at least in part on a first distribution and at least one of the first update and the second update, and means for causing information concerning the second distribution to be transmitted to at least one of the second apparatus and the third apparatus.

According to a sixth aspect of the present invention, there is provided an apparatus, comprising means for receiving, in an apparatus, a first distribution from a second apparatus, means for deriving a local distribution, means for deriving difference information describing how the local distribution differs from the first distribution, and means for causing the delta information to be transmitted to the second apparatus.

According to a seventh aspect of the present invention, there is provided a non-transitory computer readable medium having stored thereon a set of computer readable instructions that, when executed by at least one processor, cause an apparatus to at least receive, in a first apparatus, a first update from a second apparatus and a second update from a third apparatus based at least in part on a first distribution and at least one of the first update and the second update, derive a second distribution, and cause information concerning the second distribution to be transmitted to at least one of the second apparatus and the third apparatus.

According to an eighth aspect of the present invention, there is provided a non-transitory computer readable medium having stored thereon a set of computer readable instructions that, when executed by at least one processor, cause an apparatus to at least receive a first distribution from a second apparatus, derive a local distribution, derive difference information describing how the local distribution differs from the first distribution, and cause the delta information to be transmitted to the second apparatus.

### Industrial Applicability

At least some embodiments of the present invention find industrial application in process management, communication and/or network management.

### BRIEF DESCRIPTION OF THE DRAWINGS

FIGURE 1 illustrates an examine system capable of supporting at least some embodiments of the present invention;
FIGURE 2 illustrates an examine system capable of supporting at least some embodiments of the present invention;
FIGURE 3 illustrates an example apparatus capable of supporting at least some embodiments of the present invention;
FIGURE 4 is a signalling diagram illustrating signalling in accordance with at least some embodiments of the present invention;
FIGURE 5 is a flow graph illustrating a first method in accordance with at least some embodiments of the present invention, and
FIGURE 6 is a flow graph illustrating a second method in accordance with at least some embodiments of the present invention.

### DETAILED DESCRIPTION OF EXAMPLE EMBODIMENTS

Information on a global distribution may be disseminated to nodes controlling their local environments, and the nodes controlling the local environments may update information concerning their local distributions to a node maintaining the global distribution, to cause updating of the global distribution. In some embodiments, global process parameters may be adjusted based on the global distribution. Process parameters may relate, for example, to manufacture of cars, pellets, paints or other products, or to computer program parameters.

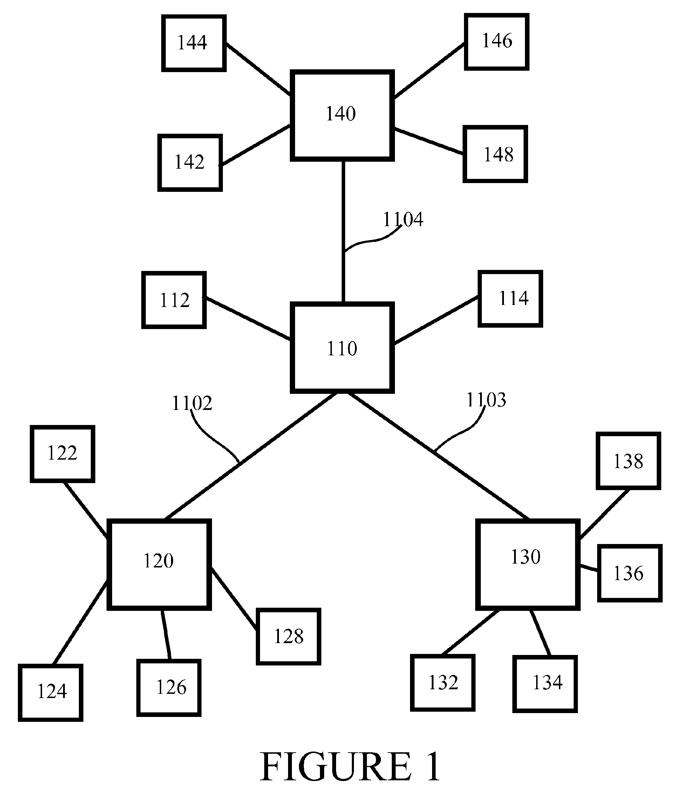

FIGURE 1 illustrates an examine system capable of supporting at least some embodiments of the present invention. Illustrated is node 110, which comprises a master node configured to derive a global distribution of performance scores. By global distribution it is meant a distribution derived from information from processes run by local nodes controlled, separately, by each local control node that node 110 is in communication with. Local node is a terminological term employed when discussing FIGURE 1, in general a local node may be considered to be a process node, that is a node running at least one instance of a process. In FIGURE 1, Node 110 is in communication with local nodes 112 and 114, which are configured to provide node 110 with information concerning processes running in node 112 and node 114, respectively. Node 110 may be configured to derive a local distribution based on information it receives from local nodes 112 and 114, or alternatively node 110 may be configured to include information representing local nodes 112 and 114 into the global distribution that node 110 is configured to derive. Node 110 may be said to control a set of local nodes, FIGURE 1 this set comprises local nodes 112 and 114.

Node 110 is in communication, via connection 1102, with node 120. Node 120 comprises a local control node that is in communication with local nodes 122, 124, 126 and 128. Node 120 is configured to derive a local distribution of performance scores based on information it receives from local nodes 122, 124, 126 and 128. Node 120 may be said to control a set of local nodes 122, 124, 126 and 128.

Node 110 is in communication, via connection 1103, with node 130. Node 130 comprises a local control node that is in communication with local nodes 132, 134, 136 and 138. Node 130 is configured to derive a local distribution of performance scores based on information it receives from local nodes 132, 134, 136 and 138. Node 130 may be said to control a set of local nodes 132, 134, 136 and 138.

Node 110 is in communication, via connection 1104, with node 140. Node 140 comprises a local control node that is in communication with local nodes 142, 144, 146 and 148. Node 140 is configured to derive a local distribution of performance scores based on information it receives from local nodes 142, 144, 146 and 148. Node 140 may be said to control a set of local nodes 142, 144, 146 and 148.

Local control nodes are optional in the sense that in some embodiments, node 110 is in communication with local nodes without the system comprising separate local control nodes.

In general, a local control node may be said to control a set of local nodes that provide to the local control node information on processes they run. The information may comprise information the local control node can use to derive a local distribution describing at least one of operation or results of processes running in the set of local nodes. To this end, the information may be provided from the local nodes concerned to the local control node without traversing another local control node along the way. The local nodes controlled by a local control node may run processes that are of the same type.

Each of the local nodes may provide to a controlling local control node 110, 120, 130 or 140, information concerning a process running on the local node. The provided information may comprise an underlying distribution, which may comprise complete information on a process, for example in the case of pellets a size of each pellet, or alternatively statistical information on the process, which may comprise a distribution specific to the local node concerned, such as for example information describing a distribution. Statistical information in general may comprise information usable in generation of a local distribution in a local control node. Local nodes may comprise, depending on the embodiment, a broad range of nodes ranging from chemical reactors, internal combustion engines and aeroplanes to mobile smartphones. In some embodiments, at least some of the local control nodes 120, 130 and 140 are mobile smartphone, tablet, phablet or laptop computers.

Although illustrated in FIGURE 1 as being in communication with local control nodes, in general local nodes may be indirectly in communication with said local control nodes, in other words there may be at least one further node disposed along a communication path that extends from a local node to a local control node controlling the local node.

Being in possession of information from local nodes, a local control node may derive a local distribution based at least in part on the information from the local nodes. In case a local control node fails to receive information from one or more local nodes it controls, the local control node may be configured to derive the local distribution based on information it did receive. In case none of the local nodes controlled by the local control node provides information, the local control node may abstain from trying to derive a local distribution.

Based at least in part on the local distribution, a local control node may, in some embodiments, modify process parameters of local nodes to thereby cause a change in operation of the processes running in the set of local nodes that the local control node controls, so that the local distribution would thereby be modified to more resemble a preferred or optimal distribution.

By comparing the local distribution to a global distribution received in a local control node from master node 110, the local control node may derive difference, or delta, information that describes how the local distribution differs from the global distribution. This difference information may be transmitted by the local control node to the master node, to thereby enable the master node to derive a new, or updated, global distribution which may be provided to at least one, and in some embodiments each, local control node the master node is in communication with.

Master node 110 may, in some embodiments, modify process parameters of local nodes to thereby cause a change in operation of the processes running in the set of local nodes that are controlled by local control nodes the master node is in communication with. For example, master node 110 may cause a modification in process parameters by signalling to the local control nodes, to thereby instruct the local control nodes to signal to local nodes they control to cause the parameter modification to take effect. Master node 110 may be configured to modify parameters in this way so that the global distribution would thereby be modified to more resemble a preferred or optimal distribution.

A distribution may be characterized in various ways. For example, a number of peaks in a distribution may be determined. A peak may be defined as a point in the distribution where moving away from the point involves a decline in the distribution. In a single-peak distribution, the peak value corresponds to the highest value in the distribution. In a multi-peak distribution, there exist more than one value in the distribution that is raised above its immediate surroundings.

A peak may be characterized as flat or sharp. A flat peak is raised more gradually above its surroundings, whereas a sharp peak is raised more dramatically above its surroundings. As a flatness of a peak increases, the peak will eventually vanish. A distribution overall can be considered flat if its peak or peaks are on average flat, and a distribution overall can be considered sharp if its peak or peaks are on average sharp. A measure of sharpness may be defined as a width of a peak at a point corresponding to half of the peak's height. The Dirac delta function may be thought of as a peak that is infinitely sharp.

For example, where the processes in local nodes comprise pellet manufacture, the global distribution reveals that there are too many pellets that are smaller than an acceptable lower limit for pellet size, and increased temperature is known by master node 110 to increase pellet size, the master node may be configured to signal to the local control nodes to cause an increase in temperature to reduce the proportion of small pellets in overall output.

As another example, where the local nodes run game applications and the distribution comprises a histogram of leaderboard, or high score, results, master node 110 may be configured to try to maintain an even distribution of scores in the games. The histogram may comprise that a range of possible scores is subdivided into a plurality or ranges, the plurality of ranges covering the entirety, or essentially the entirety, of the possible scores. Each of the plurality of ranges may correspond to a histogram bracket. If too many players score a maximum score in a game, the game may be perceived as boring and consequently players may stop playing it. Master node 110 may adjust game parameters so a difficulty challenge can be administered in a meaningful way to novice and advanced players. For example, a game may be made easier by slowing it down and more difficult by increasing its speed. Alternatively or additionally, difficulty of a game may be modified by adjusting an accuracy requirement needed to perform an action in the game. When a distribution, such as a histogram, of scores is more even it may further provide for the effect that players can be matched based on their performance level. For example, a player may receive recommendations of other players approximately on the same skill level for multi-player gaming. For example, a histogram comprising brackets, each bracket comprising players with scores falling within a score range associated with the bracket, players may be matched with other players in the same bracket. To compile a histogram, local nodes provide information on game sessions they have hosted to local control nodes and/or directly to master node 110. The local control nodes and/or master node 110 can then compile corresponding distributions and determine if actions are possible to make the local distribution and/or the global distribution more alike a preferred distribution.

A yet further example is grid computing, where loads of individual local nodes may be controlled so that each local node is enabled to provide a meaningful proportion of its computing capacity, such as 90% for example, to a computational effort. In this case the distribution may reflect the load levels of local nodes, which are reported to master node 110. If master node 110 determines that the distribution comprised a peak at 100%, or a meaningful level overall at 100%, it may send instructions to cause computing tasks to be re-assigned so that the local nodes experiencing 100% load will become less loaded. In this sense, a preferred distribution may have a single peak at 90%, in other words corresponding to a case where more local nodes are loaded at a 90% level than at any other level.

In general, modifying process parameters may comprise the master node modifying a global parameter that all local nodes take into use, or alternatively the master node may provide different parameter modification instructions to different local control nodes. For example, it may be that local nodes controlled by a certain local control node are already running in a way that produces a distribution that closely matches an optimal distribution. In that event, parameter modification relating to these local nodes may be unnecessary.

The number of local nodes illustrated in FIGURE 1, in association with any of nodes 110, 120, 130 and 140, is merely an example and the invention is not limited thereby.

In some embodiments, at least one of master node 110 and local control nodes 120, 130 and 140 are configured to run a process similar to a process run in the local nodes. In these embodiments, the master and/or local control nodes running such a process may be configured to treat information from that process similarly to information from processes running in local nodes controlled by the master and/or local control nodes. In other words, information from such a process may be included in derivation of a local distribution and/or global distribution. In a sense, a master and/or local control nodes may be seen to comprise a local node, wherein such a local node may take the form of a software process running in the master and/or local control nodes, for example.

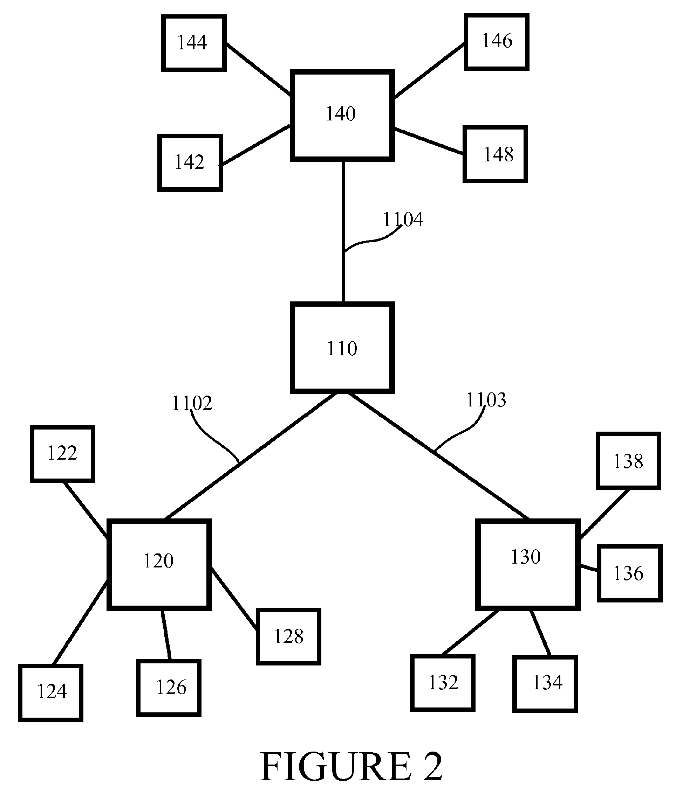

FIGURE 2 illustrates an examine system capable of supporting at least some embodiments of the present invention. The system of FIGURE 2 resembles that of FIGURE 1, with the exception that master node 110 is not in communication with local nodes except indirectly via local control nodes 120, 130 and 140. In the embodiments of FIGURE 2, the master node comprises a dedicated master node that does not itself directly participate in the processes or in control of local nodes.

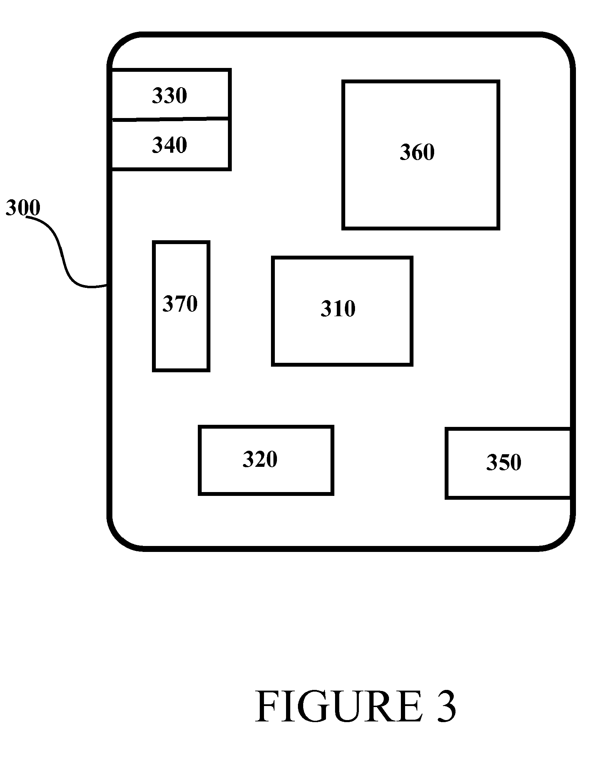

FIGURE 3 illustrates an example apparatus capable of supporting at least some embodiments of the present invention. Illustrated is device 300, which may comprise, for example, a node such as master node 110, local control node 120, 130 and/or 140, or one of the local nodes of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise a Qualcomm Snapdragon 800 processor, for example. Processor 310 may comprise more than one processor. A processing core may comprise, for example, a Cortex-A8 processing core manufactured by Intel Corporation or a Brisbane processing core produced by Advanced Micro Devices Corporation. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise magnetic, optical and/or holographic memory, for example. Memory 320 may be at least in part accessible to processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

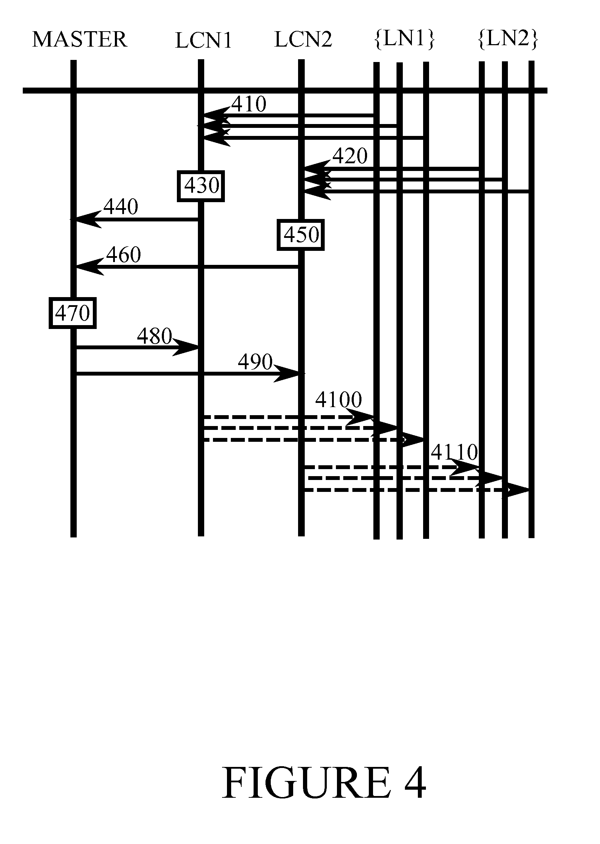

FIGURE 4 is a signalling diagram illustrating signalling in accordance with at least some embodiments of the present invention. On the vertical axes are disposed, from left to right, a master node MASTER, a first local control node LCN1, a second local control node LCN2, a set of local nodes controlled by first local control node {LN1}, and a set of local nodes controlled by the second local control node, {LN2}. Time advances from top toward the bottom. The numbers of local control nodes, and local nodes, in FIGURE 4 are examples only and do not limit the scope of the invention.

In phase 410, local nodes {LN1} communicate to local control node LCN1 information concerning processes running in local nodes {LN1}. In phase 420, local nodes {LN2} communicate to local control node LCN2 information concerning processes running in local nodes {LN2}.

Based at least in part on the information received in phase 410, local control node LCN1 derives, in phase 430, a first local distribution. Local control node LCN1 communicates, in phase 440, information concerning the first local distribution to the master node. The communicated information may comprise, for example, information defining the first local distribution in a representation without reference to other distributions, or information defining a difference between the first local distribution and a global distribution. In case local control node LCN1 is not in possession of a global distribution, it may provide the information defining the first local distribution in a representation without reference to other distributions, for example. In case local control node LCN1 is in possession of a global distribution, it may provide the information defining the difference between the first local distribution and the global distribution, for example. Based at least in part on the information received in phase 420, local control node LCN2 derives, in phase 450, a second local distribution.

In phase 460 local control node LCN2 communicates information concerning the second local distribution to the master node, which may comprise similar signalling as is described immediately above in connection with phase 440 and communicating information concerning the first local distribution. Phases 440 and 460 need not occur in the chronological order illustrated.

In phase 470, the master node may derive a global distribution, which may be an initial global distribution or an updated global distribution. Optionally, phase 470 may additionally or alternatively comprise the master node determining to modify at least one process parameter. Such a determination may be based, for example, at least in part on information concerning at least one local distribution received in the master node.

In phase 480, the master node provides to local control node LCN1 the global distribution derived in phase 470. Where phase 470 comprises the optional determination to modify at least one process parameter, phase 480 may further comprise informing, by the master node, local control node LCN1 of the modification. The global distribution may be communicated in terms of a difference to a previously communicated global distribution where a global distribution was previously communicated, or the global distribution may be communicated in terms of a representation of the global distribution without reference to other distributions.

In phase 490, the master node provides to local control node LCN2 the global distribution derived in phase 470 and/or information on a process parameter modification. In some embodiments, at least one process parameter may be modified in different ways for local control node LCN1 and local control node LCN2, as described above.

Optional phase 4100 exists in embodiments where phase 470 comprises determining a modification of at least one process parameter. In optional phase 4100, local control node LCN1 informs local nodes {LN1} of the parameter modification, to thereby cause the local nodes {LN1} to take the modification into use.

Optional phase 4110, like optional phase 4100, exists in embodiments where phase 470 comprises determining a modification of at least one process parameter. In optional phase 4110, local control node LCN2 informs local nodes {LN2} of the parameter modification, to thereby cause the local nodes {LN2} to take the modification into use.

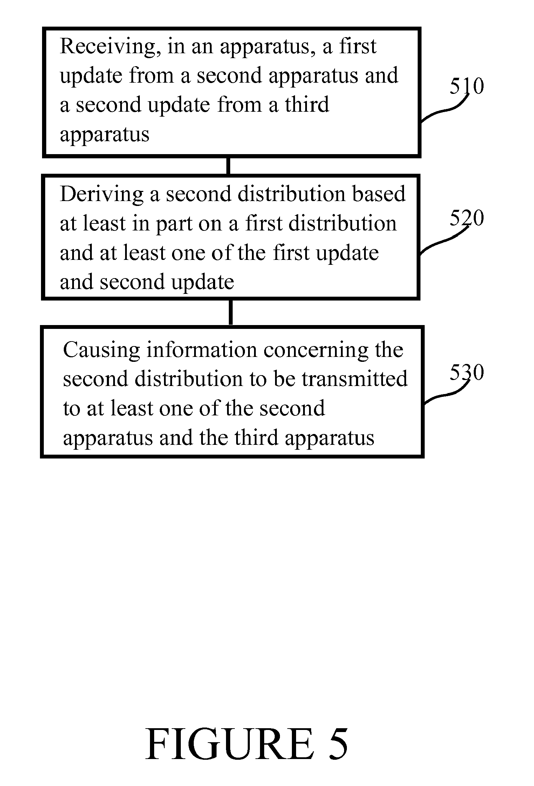

FIGURE 5 is a flow graph illustrating a first method in accordance with at least some embodiments of the present invention. The phases of the illustrated method may be performed in master node 110, for example. Phase 510 comprises receiving, in an apparatus, a first update from a second apparatus and a second update from a third apparatus. The first and second updates may each comprise difference information that describes how a respective local distribution differs from a global distribution. Phase 520 comprises deriving a second distribution based at least in part on a first distribution and at least one of the first update and the second update. Finally, phase 530 comprises causing information concerning the second distribution to be transmitted to at least one of the second apparatus and the third apparatus. In some embodiments, phase 520 comprises deriving the second distribution based at least in part on a first distribution, the first update and the second update. The first and second distributions may both comprise global distributions.

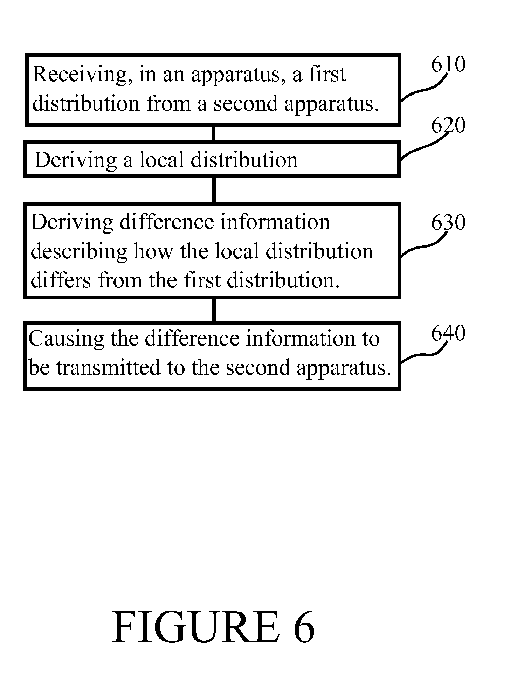

FIGURE 6 is a flow graph illustrating a second method in accordance with at least some embodiments of the present invention. The phases of the illustrated method may be performed in a local control node, for example. Phase 610 comprises receiving, in an apparatus, a first distribution from a second apparatus. The apparatus may comprise or be comprised in a local control node. Phase 620 comprises deriving a local distribution. Phase 630 comprises deriving difference information describing how the local distribution differs from the first distribution. Finally, phase 640 comprises causing the difference information to be transmitted to the second apparatus. The first distribution may comprise a global distribution.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. An apparatus comprising:
means for receiving, in a first apparatus, a first update from a second apparatus and a second update from a third apparatus;
means for deriving a second distribution based at least in part on a first distribution and at least one of the first update and the second update, and
means for causing information concerning the second distribution to be transmitted to at least one of the second apparatus and the third apparatus.

2. An apparatus according to claim 1, wherein the second distribution comprises a distribution of performance scores obtained in a plurality of process nodes running processes.

3. An apparatus according to claim 2, wherein the performance scores describe results of corresponding process yields in the processes.

4. A method comprising:
receiving, in an apparatus, a first update from a second apparatus and a second update from a third apparatus;
deriving a second distribution based at least in part on a first distribution and at least one of the first update and the second update, and
causing information concerning the second distribution to be transmitted to at least one of the second apparatus and the third apparatus.

5. A method according to claim 4, wherein the second distribution comprises a distribution of performance scores obtained in a plurality of process nodes running processes.

6. A method according to claim 5, wherein the performance scores describe results of corresponding process yields in the processes.

7. A method according to any of claims 5 - 6, wherein the processes comprise at least one of chemical, industrial or game processes.

8. A method according to any of claims 5 - 6, wherein the at least one memory and the computer program code are further configured to, with the at least one processing core, cause the apparatus to modify at least one parameter of the processes as a response to the second distribution.

9. A method according to claim 8, wherein the at least one memory and the computer program code are further configured to, with the at least one processing core, cause the apparatus to transmit information concerning the modifying to at least one of the second apparatus and the third apparatus.

10. A method according to claim 8 or 9, wherein the modifying aims to cause a third distribution, to be derived after the second distribution, to be flatter than the second distribution.

11. A method according to claim 8 or 9, wherein the modifying aims to cause a third distribution, to be derived after the second distribution, to be sharper than the second distribution.

12. An apparatus comprising:
means for receiving, in an apparatus, a first distribution from a second apparatus;
means for deriving a local distribution;
means for deriving difference information describing how the local distribution differs from the first distribution, and
means for causing the delta information to be transmitted to the second apparatus.

13. A method, comprising:
receiving, in an apparatus, a first distribution from a second apparatus;
deriving a local distribution;
deriving difference information describing how the local distribution differs from the first distribution, and
causing the delta information to be transmitted to the second apparatus.

14. A method according to claim 13, wherein the local distribution is derived from information received in the apparatus from nodes that are under the control of the apparatus.

15. A computer program, configured to cause a method in accordance with at least one of claims 4 - 11 or 13 - 14 to be performed.
